# EUROPEAN PATENT SPECIFICATION

(11) **EP 4 024 299 B1**
(45) Date of publication and mention of the grant of the patent: **26.02.2025**
(21) Application number: 21150265.3
(22) Date of filing: 05.01.2021
(51) Int. Cl.: G06Q 10/00

(54) **AIRCRAFT LAVATORY MANAGEMENT SYSTEM AND METHOD OF ASSIGNING A PASSENGER TO A LAVATORY WITHIN AN AIRCRAFT PASSENGER CABIN**
FLUGZEUGTOILETTENVERWALTUNGSSYSTEM UND VERFAHREN ZUM ZUWEISEN EINES PASSAGIERS ZU EINER TOILETTE INNERHALB EINER FLUGZEUGPASSAGIERKABINE
SYSTÈME DE GESTION DES TOILETTES D'AÉRONEF ET PROCÉDÉ D'AFFECTATION D'UN PASSAGER À UNE TOILETTE À L'INTÉRIEUR D'UNE CABINE DE PASSAGER D'AÉRONEF

(43) Date of publication of application: 06.07.2022
(73) Proprietor: Goodrich Lighting Systems GmbH & Co. KG, 59557 Lippstadt (DE)
(72) Inventor: PAWLICZEK, Carsten, 59556 Lippstadt (DE); TRINSCHEK, Robert, 59067 Hamm (DE); UEBERSCHAER, Andreas, 33330 Guetersloh (DE); DEPTA, Marion, 59555 Lippstadt (DE); SCHALLENBERG, Bjöern, 59590 Geseke (DE)
(74) Representative: Schmitt-Nilson Schraud Waibel Wohlfrom Patentanwälte Partnerschaft mbB

(56) References cited:
- US-A1- 2007 241 927
- US-A1- 2009 112 638
- US-B1- 10 185 921
- US-B1- 6 329 919
- US-B1- 8 005 656

## Description

The present invention is in the field of passenger aircraft, in particular in the field of aircraft lavatory management for passenger aircraft. The present invention includes a method of assigning a passenger to a lavatory within an aircraft passenger cabin, an aircraft lavatory management system, which is configured for assigning a passenger to a lavatory within an aircraft passenger cabin, and an aircraft comprising such a lavatory management system.

Passenger aircraft are equipped with a plurality of lavatories for the passengers.

Up to now, passengers decide themselves which lavatory they use. This may result in drawbacks such as an inefficient utilization of the lavatories, especially during "rush hours". With increased utilization of the lavatories, the need for intermediate cleaning/disinfection also rises, which in turn further increases the lavatory bottleneck. This makes it difficult for the aircraft crew to keep the lavatories in a hygienically acceptable condition. Further, long waiting queues in front of the lavatories are unpleasant to the passengers and are counterproductive for ensuring social distancing within an aircraft. US 2009/112638 A1 discloses a system for virtually queuing at least one passenger onboard a mobile platform is provided. The system includes a source of user input that enables the at least one passenger to request to be placed in a virtual line. The system also includes a queuing control module that generates queue data that includes at least one next passenger in the virtual line from a list of the at least one passenger requested to be placed in the virtual line. The system further includes a notification control module that notifies the at least one next passenger that the at least one passenger is next in the virtual line based on an operating condition associated with the mobile platform.

It would therefore be beneficial to organize the use of lavatories in an aircraft more efficiently.

Exemplary embodiments of the invention include a method according to claim 1 of assigning a passenger to a lavatory within an aircraft passenger cabin.

Exemplary embodiments of the invention further include a lavatory management system according to claim 9 for an aircraft passenger cabin comprising at least two lavatories, wherein the lavatory management system includes: a plurality of smart lavatory signs; a plurality of input devices, for example lavatory assignment request buttons, which are configured for allowing passengers to input lavatory assignment requests; and a controller. The controller is configured for receiving lavatory assignment requests from the input devices; adding passengers to the waiting queues of the at least two lavatories employing a method according to an exemplary embodiment of the invention; and providing visual outputs on the plurality of smart lavatory signs, wherein each visual output is indicative of at least a portion of the waiting queue of at least one lavatory.

Exemplary embodiments of the invention also include an aircraft according to claim 14 comprising a lavatory management system according to an exemplary embodiment of the invention.

A method and a lavatory management system according to exemplary embodiments of the invention allow for a more efficient distribution of the lavatory assignment requests across the lavatories, provided within an aircraft passenger cabin. As the lavatory assignment requests are distributed to the different lavatories based on the passengers' respective seating positions within the aircraft, the distances between the passengers and the lavatories, which the passengers are assigned to, may be minimized.

Additionally, crossings of the paths of passengers, moving between their seats and the lavatories, may be minimized as well. This may result in an improved social distancing within the aircraft passenger cabin. Further, with the configuration of the at least two spatial zones being variable and being dependent on a plurality of zone configuration parameters, the method and lavatory management system according to exemplary embodiments of the invention may adapt to the varying demand within an aircraft passenger cabin.

The method and lavatory management system may dynamically adapt to the current numbers of requests from different parts of the aircraft passenger cabin. A load leveling between the lavatories may be achieved. Above described minimization of passenger path crossings may be achieved in a dynamic manner, without leaving lavatory capacities unused.

The assignment of passengers to different lavatories may be restricted to the respective booking classes within the passenger cabin. Load leveling may be performed separately within each of the booking classes. In particular, each booking class that has at least two lavatories may be divided into at least two spatial zones, with the configuration of the at leas twp spatial zones being variable. More specifically, in such an embodiment, it is possible that passengers from the business class will not be sent to lavatories located within the economy class and vice versa.

Alternatively / additionally, passengers from a first booking class may be assigned to lavatories located in a second booking class in case the lavatories in the first booking class have waiting queues that are longer than an overload threshold. In a particular embodiment, passengers from a superior booking class may be assigned to lavatories located in a lower booking class, in order to reduce their waiting times, but passengers from the lower booking class may not be assigned to lavatories located in the superior booking class. In this way, a limited load leveling between booking classes may be achieved, while heavy passenger traffic in the superior booking class may be prevented.

In a further embodiment, the lavatory management system may use personal passenger information for adapting the configuration of the at least two spatial zones. The personal passenger information may for example contain the sex or age of the passengers, which are available from the boarding plan of the aircraft. For example, the configuration of the at least two spatial zones may take into account statistical data about the average time of lavatory usage, such as data that women statistically use the lavatories longer than men or data that elderly people statistically use the lavatories longer than younger people. In this way, weighted queue lengths for the at least two lavatories may be determined and may be used for the configuration of the at least two spatial zones. It is also possible that the at least two lavatories are split into two lavatory groups, namely a first lavatory group assigned exclusively to men and a second lavatory group assigned exclusively to women.

As stated above, a particular spatial zone is associated with a particular lavatory. In particular, the particular spatial zone may be associated with that lavatory that is closest to the particular spatial zone.

Exemplary embodiments of the invention may further allow for reducing the work load of the cabin crew, maintaining and cleaning the lavatories. Additionally, the formation of passenger crowds in front of the lavatories, which is unfavorable from a hygienic point of view, in particular in pandemic situations, and which is also perceived as annoying by passengers sitting next to the lavatories, may be avoided.

According to an embodiment of the invention, the aircraft passenger cabin is divided into said at least two spatial zones by at least one borderline. This at least one borderline is a virtual borderline, i.e. it is not visible to the passengers, and it is used only for the purposes of the lavatory management. The method may include re-configuring at least a subset of the at least two spatial zones by moving at least one borderline based on said plurality of zone configuration parameters.

In an embodiment, the at least one borderline includes at least one longitudinal borderline extending along a longitudinal direction of the aircraft, and the step of re-configuring at least a subset of the at least two spatial zones includes moving at least one longitudinal borderline in a transverse direction of the aircraft passenger cabin, in order to adjust the division of the aircraft passenger cabin into multiple spatial zones along the transverse direction. These spatial zones may in particular include a starboard zone and a portside zone. The spatial zones may further include at least one central zone sandwiched between the starboard zone and the portside zone.

In an embodiment, the at least one borderline includes at least one transverse borderline extending in a transverse direction of the aircraft passenger cabin, in particularly orthogonally to the longitudinal direction of the aircraft, and the step of re-configuring at least a subset of the at least two spatial zones includes moving at least one transverse borderline in a longitudinal direction of the aircraft passenger cabin, in order to adjust the division of the aircraft passenger cabin into multiple spatial zones along the longitudinal direction. These zones may in particular include a front zone and a rear zone. The zones may further include at least one middle zone sandwiched between the front zone and the rear zone.

The implementation of such virtual borderlines has been found as allowing a very efficient adjustable / variable division of the aircraft passenger cabin into multiple spatial zones.

The movement of the borderlines may include reducing the number of spatial zones by moving at least two adjacent borderlines to the same position. Reducing the number of spatial zones may be beneficial for enhancing the efficiency of the method, for example in situations in which at least one of the lavatories is not available due to maintenance or malfunction.

In an embodiment, the method includes providing a visual indication of the particular lavatory, whose waiting queue the passenger has been added to. This may in particular include a visual indication at the passenger space close to or at the passenger's seat and/or at a lavatory sign, which is provided next to the respective lavatory.

In case the visual indication is provided at the passenger space, the visual indication may in particular include information indicating the lavatory, whose waiting queue the passenger has been added to, in order to allow the passenger to identify the lavatory which he/she has been assigned to.

In case the visual indication is provided at a lavatory, the visual indication will include information identifying the passenger, for example a passenger ID / boarding number or the number of the passenger's seat.

According to an embodiment, the method includes re-configuring the at least two spatial zones in accordance with a predetermined re-configuration schedule. The method may in particular include re-configuring the at least two spatial zones in periodic intervals, and/or after the receipt of each lavatory assignment request. Re-configuring the at least two spatial zones in accordance with a predetermined reconfiguration schedule results in regularly adjusting the distribution of the lavatory assignment requests according to the current load distribution. In this way, a very efficient distribution scheme of the lavatory assignment requests over the at least two waiting queues may be regularly established.

According to an embodiment, the plurality of zone configuration parameters further include at least one of: an "in service" / "out of service" indication for each of the at least two lavatories; for each of the at least two lavatories, a total number of passengers, who have used the respective lavatory since its last maintenance and/or cleaning; and scheduled service times for each of the at least two lavatories.

According to an embodiment, the plurality of smart lavatory signs, the plurality of input devices, and the controller are configured for communicating with each other by a wired or by a wireless data transmission. The wireless data transmission in particular may include WLAN, Bluetooth^{®}, or optical, such as infrared, data transmission.

Smart lavatory signs, input devices and a controller, which are configured for communicating by wireless data transmission, may be added to an aircraft passenger cabin without the need for modifying the existing wiring within said aircraft passenger cabin. In consequence, the installation of a lavatory management system according to an exemplary embodiment of the invention may be carried out in a minimally invasive manner. Retrofitting existing aircraft with lavatory management systems according to exemplary embodiments of the invention may be achieved in a comparably easy manner.

In an embodiment, at least one of the smart lavatory signs and/or of the input devices may be configured as a relay, i.e. at least one of the smart lavatory signs and/or of the input devices may be configured for receiving information from at least one other smart lavatory sign and/or input device and for forwarding the received information to another smart lavatory sign or input device. This may allow transmitting information between the smart lavatory signs and/or the input devices over large distances, using short wires and/or an energy-efficient short range wireless data transmission.

In an embodiment, the smart lavatory signs are provided at the passenger seats, in particular at armrests of the passenger seats or in passenger service units located above the passenger seats. Alternatively or additionally, smart lavatory signs may be provided at the lavatories and/or at the ceiling of the aircraft passenger cabin.

In an embodiment, the controller is integrated into one of the plurality of smart lavatory signs or into one of the plurality of input devices. A master-slave-configuration may be established, in which the lavatory sign or the input device comprising the controller acts as the "master", controlling the operation of the other smart lavatory signs and input devices ("slaves").

In an embodiment, a respective controller is integrated into at least two of the plurality of smart lavatory signs or the plurality of input devices, in order to provide an additional second controller as a backup, which is activated in case the first controller should fail.

In an embodiment, the lavatory management system is additionally configured for at least one of the following, in particular for any subset of the following:
issuing a service request to the aircraft crew, for example in case one of the lavatories needs to be maintained and/or cleaned;
deactivating at least one of the lavatories and closing/shutting down the waiting queue of said lavatory, for example in case the lavatory is defect or needs to be maintained and/or cleaned; deactivating at least one of the lavatories may include locking the door of said lavatory in order to prevent unauthorized access to the lavatory;
unlocking and activating at least one of the lavatories and re-opening the waiting queue of said lavatory, for example after the lavatory has been repaired, maintained and/or cleaned;
activating and/or deactivating ventilation of at least one of the lavatories, in particu lar depending on it most recent use;
activating a disinfection process of at least one of the lavatories, in particular depending on its most recent use;
controlling visual status indicators, indicating the status of at least one of the lavatories, wherein the status may in particular include "free", "occupied", "out of order", or "blocked for maintenance".

Such a lavatory management system may allow for a very efficient use of the lavatories provided within an aircraft passenger cabin.

In the following, exemplary embodiments of the invention are described with respect to the accompanying drawings, wherein:
Figure 1 depicts a schematic cross-sectional view of an aircraft passenger cabin, which is divided in a first configuration comprising four spatial zones.
Figure 2 depicts a schematic cross-sectional view of the aircraft passenger cabin of Figure 1, divided in a second configuration comprising four spatial zones.
Figure 3 depicts a schematic cross-sectional view of the aircraft passenger cabin of Figure 1, divided in a configuration comprising two spatial zones.
Figure 4 shows a schematic view of a smart lavatory sign, as may be employed in a lavatory management system according to an exemplary embodiment of the invention.
Figure 5 depicts a schematic view of an overhead passenger service unit comprising input devices, as may be employed in a lavatory management system according to an exemplary embodiment of the invention.
Figure 6 depicts a schematic view of an armrest passenger service unit comprising an input device, as may be employed in a lavatory management system according to an exemplary embodiment of the invention.
Figure 7 depicts a schematic view of a lavatory management system according to an exemplary embodiment of the invention.

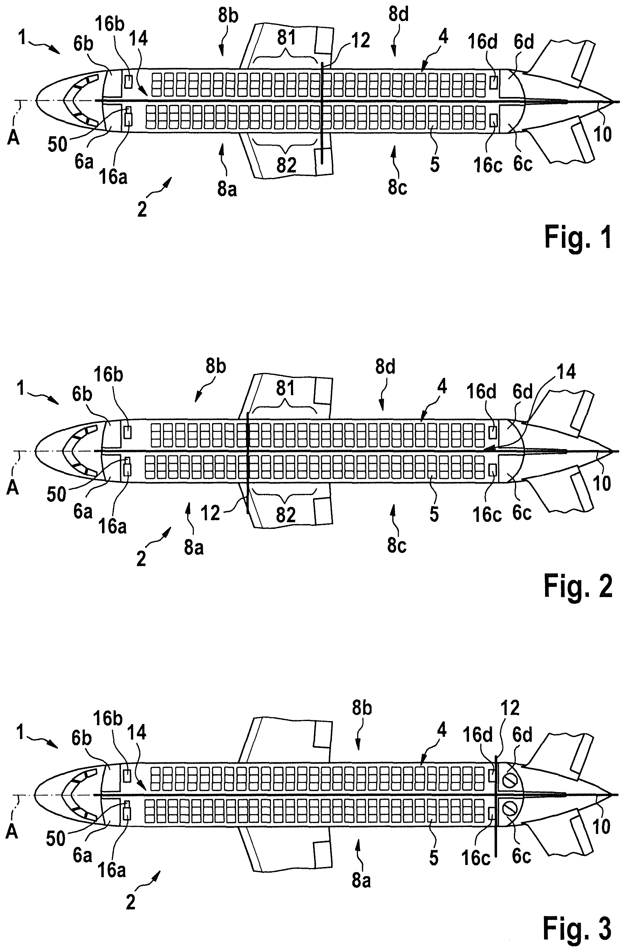

Figures 1 to 3 depict three schematic cross-sectional views of a passenger cabin 2 of an aircraft 1, also referred to as aircraft passenger cabin 2 herein.

The aircraft passenger cabin 2 is equipped with a plurality of passenger seats 4. The passenger seats 4 are arranged next to each other forming a plurality of passenger seat rows. Each passenger seat row comprises two groups of passenger seats 4, respectively including three passenger seats 4. The two groups of passenger seats 4 are separated from each other by an aisle 14 extending along a longitudinal axis A of the aircraft 1.

The aircraft passenger cabin 2 is further equipped with four lavatories 6a-6d. In the exemplary configuration depicted in Figures 1 to 3, lavatories 6a-6d are provided at four locations within the aircraft passenger cabin 2. A first lavatory 6a is located at the front portside end of the aircraft passenger cabin 2, a second lavatory 6b is located at the front starboard end of the aircraft passenger cabin 2, a third lavatory 6c is located at the rear portside end of the aircraft passenger cabin 2, and a fourth lavatory 6d is located at the rear starboard end of the aircraft passenger cabin 2.

According to an exemplary embodiment of the invention, the aircraft passenger cabin 2 is divided into a plurality of spatial zones 8a-8d. In the exemplary configurations depicted in Figures 1 and 2, the aircraft passenger cabin 2 is divided into four spatial zones 8a-8d by a longitudinal borderline 10 extending along a longitudinal axis A of the aircraft 1, and by a transverse borderline 12, which extends perpendicularly to the longitudinal borderline 10 and the longitudinal axis A of the aircraft 1.

The borderlines 10, 12 are "virtual" borderlines, i.e. the borderlines 10, 12 are not visible to the passengers 5 and they are used only for the purposes of lavatory management, as it is described in the following.

In the embodiment depicted in Figure 1, the longitudinal borderline 10 extends along the aisle 14 through the longitudinal axis A of the aircraft 1 separating the aircraft passenger cabin 2 into a starboard portion 8b, 8d and a portside portion 8a, 8c, respectively comprising basically the same number of passenger seats 4. Similarly, the transverse borderline 12 is arranged at a basically central position along the longitudinal extension of the aircraft passenger cabin 2, so that the transverse borderline 12 separates the aircraft passenger cabin 2 into a front portion 8a, 8b and a rear portion 8c, 8d, respectively comprising basically the same number of passenger seats 4.

As a result, the four spatial zones 8a-8d comprise basically the same number of passenger seats 4.

Each spatial zone 8a-8d is associated with one of the lavatories 6a-6d.

In particular, each spatial zone 8a-8d is associated with the lavatories 6a-6d located within the respective spatial zone 8a-8d. In other words, the first spatial zone 8a is associated with the first lavatory 6a, the second spatial zone 8b is associated with the second lavatory 6b, the third spatial zone 8c is associated with the third lavatory 6c, and the fourth spatial zone 8d is associated with the second lavatory 6d.

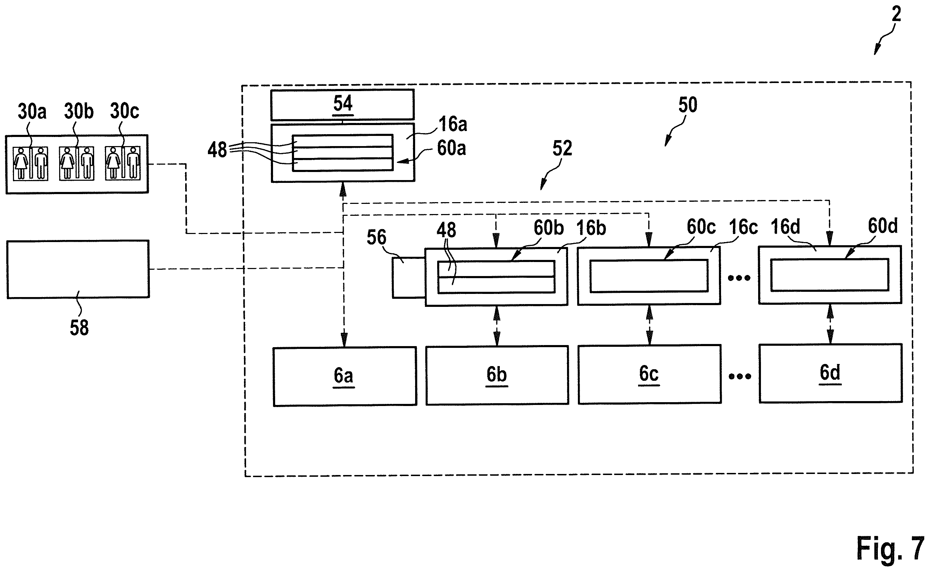

The aircraft passenger cabin 2 is equipped with a lavatory management system (LMS) 50 (cf. Figure 7), which is configured for managing lavatory assignment requests 48, issued by passengers 5 within the aircraft passenger cabin 2.

The LMS 50 comprises four waiting queues 60a-60d (cf. Figure 7), each waiting queue 60a-60d being associated with one of the lavatories 6a-6d, respectively.

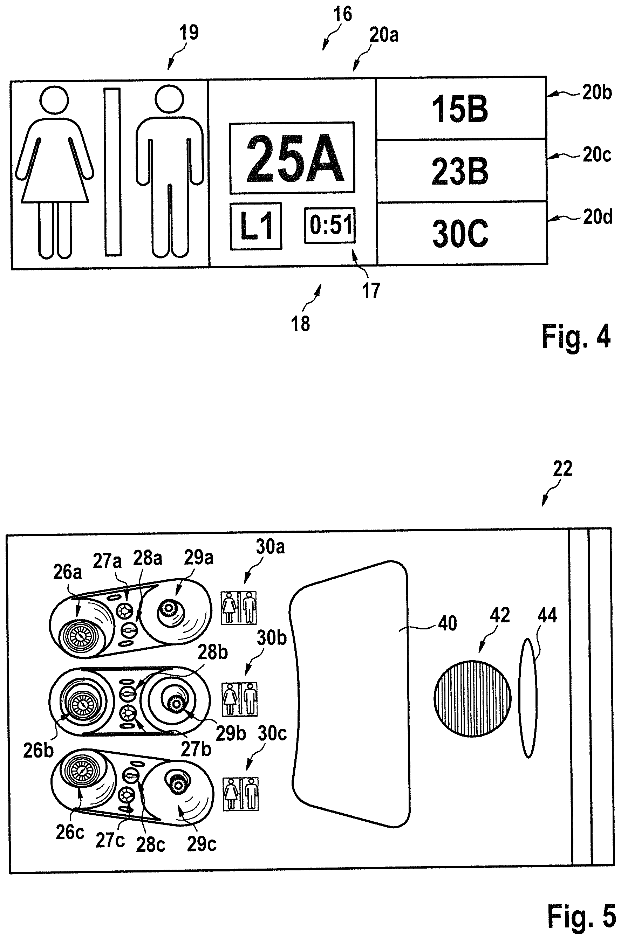

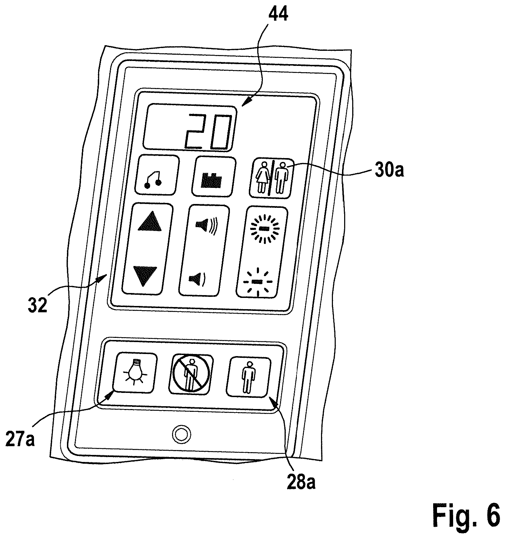

When a passenger 5 desires to use a lavatory, the passenger 5 issues a lavatory assignment request 48 via an input device 30a-30c (see Figures 5 to 7), for example by pressing lavatory assignment request button 30a-30c. Each passenger 5 is provided with his personal input device, which is located at his passenger seat 4. Exemplary embodiments of input devices / lavatory assignment request buttons 30a-30c are depicted in Figures 5 and 6, which will be discussed further below.

Every lavatory assignment request 48, issued by a passenger 5, is received by the LMS 50, and the LMS 50 determines the location of the seat 4 of the passenger 5 issuing the request.

Based on the seat location of the passenger 5 issuing the request, the LMS 50 determines the spatial zone 8a-8d of the aircraft passenger cabin 2, in which the seat 4 of the passenger 5 issuing the request is located. The passenger's lavatory assignment request 48 is then added to the waiting queue 60a-60d of the lavatory 6a-6d which is associated with the determined spatial zone 8a-8d.

Referring in particular to the exemplary configurations depicted in Figure 1, the passenger's request will be added to the waiting queue 60a-60d of the first lavatory 6a, if the passenger's seat 4 is located in the first spatial zone 8a; the passenger's request will be added to the waiting queue 60a-60d of the second lavatory 6b, if the passenger's seat 4 is located in the second spatial zone 8b; the passenger's request will be added to the waiting queue 60a-60d of the third lavatory 6c, if the passenger's seat 4 is located in the second third zone 8c; and the passenger's request will be added to the waiting queue 60a-60d of the fourth lavatory 6d, if the passenger's seat 4 is located in the fourth spatial zone 8d.

A soon as a lavatory assignment request 48 has been received, a confirmation signal, indicating that the passenger request has been received by the LMS 50, may be issued. The confirmation signal may include at least one of a visual signal, an acoustic signal and a tactile signal.

For example, the passenger request button 30a-30c, which is used for issuing the lavatory assignment request 48, may light up and/or vibrate, in order to confirm the request. Alternatively or additionally, the confirmation signal may be output via at least one of a plurality of smart lavatory signs 16a-16d, provided within the aircraft passenger cabin 2. A smart lavatory sign 16a-16d allows for dynamically changing the information which is given by the smart lavatory sign 16a-16d to the passengers 5.

In addition to providing a confirmation signal, the smart lavatory sign 16a-16d may indicate the waiting queue 60a-60d and/or the lavatory 6a-6d to which the passenger's lavatory assignment request 48 has been added, and the position of the passenger's request within said waiting queue 60a-60d.

The waiting queues 60a-60d of the lavatories 6a-6d may be processed following the first-in-first-out (FIFO) principle. I.e. as soon as a lavatory 6a-6d is reported as being available, the passenger 5, which issued the first lavatory assignment request 48 within the waiting queue 60a-60d, associated with said lavatory 6a-6d, is assigned to said lavatory 6a-6a. The passenger 5 is then invited to the assigned lavatory 6a-6d by a visual output, which is output on at least one smart lavatory sign 16a-16d. The visual output indicates the passenger 5, in particular the boarding number or the seat 4 of the passenger 5, and the lavatory 6a-6d, the passenger 5 is assigned to.

In an optional embodiment, the average waiting times of passengers sitting in a more expensive class, such as the first class or a business class, may be reduced by prioritizing the lavatory assignment requests 48 of those passenger 5 over the the lavatory assignment requests 48 of passengers 5 sitting in a less expensive class, such as an economy class.

Smart lavatory signs 16a-16d may be provided at the lavatories 6a-6d, at the passenger seats 4, and/or at other positions within the aircraft passenger cabin 2, which are well visible to the passengers 5. Entertainment displays (not shown) located at the passenger seats 4 may be employed as smart lavatory signs 16a-16d as well.

A smart lavatory sign 16a-16d may in particular be provided next to each passenger request buttons 30a-30c, in order to show the assignments of the requests, input via the respective passenger request button 30a-30c.

The configuration of the aircraft passenger cabin 2, depicted in Figures 1 to 3, is only exemplary. The skilled person understands that other configurations of the aircraft passenger cabin 2 are possible as well. Such configurations in particular may include configurations comprising more or less rows of passenger seats 4, configurations, in which more or less than six passenger seats 4 are arranged in each row, and the passenger seats 4 in each row may be separated by more than one aisle 14. Further, the aircraft passenger cabin 2 may be equipped with more or less than four lavatories 6a-6d and smart lavatory signs 16a-16d, and the lavatories 6a-6d and the smart lavatory signs 16a-16d may be located at other positions than the positions depicted in Figures 1 to 3.

The configuration of the spatial zones 8a-8d, depicted in Figure 1, minimizes the distances between each passenger 5 and the lavatory 6a-6a the passenger 5 is assigned to. I.e. in the configuration depicted in Figure 1, each passenger 5 is added to the waiting queue 60a-60d of the lavatory 6a-6d, which is closest to his/ her seat 4.

This simple assignment scheme however, may not always result in the most efficient assignment of the lavatory assignment requests 48. For example, at a given point in time, the first and second lavatories 6a, 6b, located in the front portion 8a, 8b of the aircraft passenger cabin 2, may be used more heavily than the third and fourth lavatories 6c, 6d, located in the rear portion 8c, 8d of the aircraft passenger cabin 2.

In such a situation, although the seat 4 of a passenger 5, issuing a lavatory assignment request 48, may be located closer to one of the lavatories 6a, 6b located in the front portion of the aircraft passenger cabin 2, it may be more efficient to assign said passenger request to one of the lavatories 6c, 6d located in the rear portion of the aircraft passenger cabin 2, in order to reduce the passenger's waiting time.

Thus, according to exemplary embodiments of the invention, the configuration of the spatial zones 8a-8d is not static, but variable. In other word, a LMS 50 according to an exemplary embodiment of the invention dynamically adjusts the configuration of the spatial zones 8a-8d, based on predefined zone configuration parameters. The predefined zone configuration parameters in particular may include the lengths of the waiting queues 60a-60d of the lavatories 6a-6d.

Figure 2 illustrates an example, in which the first and second lavatories 6a, 6b, located in the front portion 8a, 8b of the aircraft passenger cabin 2, have been - according to the configuration of the spatial zones of Figure 1 - requested more frequently than the third and fourth lavatories 6c, 6d, located in the rear portion 8c, 8d of the aircraft passenger cabin 2.

In consequence, the virtual transverse borderline 12, which extends perpendicularly to the longitudinal direction of the aircraft passenger cabin 2, and which divides the aircraft passenger cabin 2 into front spatial zones 8a, 8b and rear spatial zones 8c, 8d, is moved towards the front end of the aircraft passenger cabin 2. As a result, the rear spatial zones 8c, 8d comprise more passenger seats 4 than the front spatial zones 8a, 8b.

In consequence, lavatory assignment requests 48 from passengers, sitting in zones 81, 82 in a middle portion of the aircraft passenger cabin 2, who would have been assigned to the first or second lavatories 6a, 6b in the configuration depicted in Figure 1, will now be assigned to the third or fourth lavatories 6c, 6d, in order to balance the load of the lavatories 6a-6d and to minimize the average waiting times of the passengers 5.

Although not explicitly shown in the figures, the skilled person understands that the position of the virtual longitudinal borderline 10 may be adjusted similarly in addition or alternatively to the described adjustment of the virtual transverse borderline 12 in case of an unbalanced usage of the lavatories located on the portside and on the starboard side of the aircraft passenger cabin 2.

The configuration of the spatial zones 8a-8d may be re-configured in accordance with a predetermined re-configuration schedule, for example in periodic intervals, and/or after a predefined number lavatory assignment requests 48 have been received.

The LMS 50 may also monitor the waiting times of the passengers 5 and re-configure the configuration of the spatial zones 8a-8d if an imbalance between the waiting times of the individual lavatories 6a-6d is detected.

An LMS 50 according to an exemplary embodiment of the invention may further be configured for handling situations in which at least one of the lavatories 6a-6d is not available, e.g. due to a technical defect or due to maintenance and/or cleaning.

An example of such a situation is depicted in Figure 3. In said example, the third and fourth lavatories 6c, 6d located at the rear end of the aircraft passenger cabin 2 are not available. Therefore, the virtual transverse borderline 12 is moved to the very rear end of the aircraft passenger cabin 2. In consequence, the number of spatial zones 8a-8d into which the aircraft passenger cabin 2 is divided, is reduced from four (in Figures 1 and 2) to two (in Figure 3), and all lavatory assignment requests 48 are assigned to the first and second lavatories 6a, 6b, located in the front portion 8a, 8b of the aircraft passenger cabin 2.

This prevents passengers 5 from approaching the lavatories 6c, 6d located at the rear end of the aircraft passenger cabin 2, only to learn that these lavatories 6c, 6d are not available for use.

Similarly, the configuration of the spatial zones 8a-8d may be adjusted appropriately in case the first and second lavatories 6a, 6b, located at the front end of the aircraft passenger cabin 2, are not available or lavatories located on one lateral side of the aircraft passenger cabin 2 are not available or a single lavatory is not available.

Figure 4 shows a schematic view of a smart lavatory sign 16, as may be employed in a lavatory management system according to an exemplary embodiment of the invention.

The smart lavatory sign 16 comprises a display 18, e.g. an LED display or an LCD display 18, which is divided into at least four portions 20a-20d. Alternatively the smart lavatory sign 16 may comprise a plurality of separate displays 20a-20d.

In the first portion 20a of the display 18, the seat 4, which is identified by its row ("25") and column ("A"), of the passenger that is currently being invited into a lavatory is indicated. The color of the information, shown in the first portion 20a, may change, e.g. between red and green or any other colors, and/or the information may flash depending on whether the passenger 5 has already entered the lavatory 6a-6d or not.

Optionally, the first portion 20a of the display 18 may additionally indicate the particular lavatory the passenger 5 is assigned to ("L1"), in particular in configurations in which the smart lavatory sign 16 is not located next to the respective lavatory 6a-6d.

As long as the passenger 5 has not entered the lavatory 6a-6d he is assigned to, a countdown 17 may be displayed in the first portion 20a indicating how long the respective lavatory 6a-6d will be reserved for the respective passenger 5. If the countdown 17 runs down, before the assigned passenger 5, has entered the lavatory 6a-6d, the lavatory 6a-6d will be assigned to the next passenger 5 in the waiting queue 60a-60d. The first portion 20a of the displays 18 may flash during the last seconds of the countdown 17.

The seats of the passengers, who are next in the waiting queue 60a-60d of the respective lavatory 6a-6d, are displayed in the second to fourth portions 20b-20d of the display 18. This allows the passengers 5 to estimate their respective waiting times and to prepare for timely approaching and entering the lavatory 6a-6d they are assigned to.

The smart lavatory sign 16 may further comprise a visual status indicator 19, which is configured for indicating the status of the respective lavatory 6a-6d. The status of the lavatory 6a-6d, which for example may include "free", "occupied", "out of order", "blocked for maintenance", may be indicated by different colors, graphical signs, or texts.

Figure 5 depicts a schematic view of an overhead passenger service unit (PSU) 22, which is arranged above the passengers of a single passenger row, as it is seen from the side of a passenger 5 sitting on a passenger seat 4 below the overhead passenger service unit 22.

On the side, which is shown to the left in Figure 5, the overhead passenger service unit 22 comprises a row of three adjustable reading lights 26a-26c, which are arranged next to each other.

Six electrical switches 27a-27c, 28a-28c are provided to the right side of the reading lights 26a-26c, a pair of two switches 27a-27c, 28a-28c next to each of the reading lights 26a-26c respectively. One of the switches 27a-27c of each pair is configured for switching the adjacent reading light 26a-26c, and the second switch 28a-28c of each pair is configured as for triggering a signal for calling cabin service personnel.

A row of three adjacent gaspers 29a-29c arranged in the lateral direction is provided next to the switches 27a-27c, 28a-28c.

Next to the gaspers 29a-29c, there are three input devices / lavatory assignment request buttons 30a-30c, which allow passengers 5 to input lavatory assignment requests 48 by pressing the respective lavatory assignment request button 30a-30c. One of the assignment request buttons 30a-30c is assigned to each seat 4, respectively.

The lavatory assignment request buttons 30a-30c may be configured for providing a feedback that a respective lavatory assignment request 48 has been received, for example by lighting up, changing their color and/or providing a tactile feedback, such as vibration.

Next to the lavatory assignment request buttons 30a-30c is a removable cover 40, which covers a cavity housing at least three oxygen masks (not shown). In the event of pressure loss within the cabin, the removable cover 40 will open, the oxygen masks will drop out of the cavity and each of the passengers 5, sitting below the overhead passenger service unit 22, may grasp one of the oxygen masks. The oxygen masks will be supplied with oxygen allowing the passengers 5 to continue to breathe normally.

On the side opposite to the gaspers 29a-29c, a grid 42 is formed within overhead passenger service unit 22. A loudspeaker (not shown), which may be used for delivering acoustic announcements to the passengers 5, is arranged behind said grid 42.

Next to the grid 42, there is a display panel 44, which may be configured for selectively showing a plurality of visual signs (not shown), such as "non smoking" or "fasten you seat belt". The display panel 44 may be illuminated from behind, in order to deliver visual information to the passengers 5 sitting below the overhead passenger service unit 22.

The display panel 44 may also be configured as a smart lavatory sign 16 for providing information from the LMS 50 to the passengers 5. This information may include an acknowledgment that a lavatory assignment request 48 has been received, an indication of the lavatory 6a-6d, the passenger 5 is assigned to, and the position of the passenger's lavatory assignment request 48 within the respective waiting queue 60a-60d.

An alternative embodiment of a passenger service unit 22, which in particular may be arranged in an armrest of a passenger seat 4, is depicted in Figure 6.

In the configuration depicted in Figure 6, an individual passenger service unit 22 is assigned to each passenger seat 4, and the passenger service unit 22 comprises a plurality of control buttons 32 for controlling an aircraft entertainment system.

The selection and the arrangements of the individual components and switches/ buttons of the passenger service unit 22, depicted in Figures 5 and 6, are only exemplary. The components and switches/buttons of the passenger service units 22 may be arranged differently, depending on the actual needs.

Figure 7 depicts a schematic view of a LMS 50 according to an exemplary embodiment of the invention as a block diagram.

The LMS 50 comprises a plurality of smart lavatory signs 16a-16d, which may be arranged next to the lavatories 6a-6d, in the passenger service units 22 or at other suitable positions within aircraft passenger cabin 2.

The LMS 50 further comprises a plurality of lavatory assignment request buttons 30a-30c, allowing passengers to input lavatory assignment requests 48.

The smart lavatory signs 16a-16d and the input devices 30a-30c communicate with each other via a communication network 52.

The communication network 52 may be a wired network 52 or a wireless network 52 or a combination thereof. The smart lavatory signs 16a-16d and the input devices 30a-30c may in particular be configured for communicating with each other using WLAN and/or Bluetooth^{®} technology. The smart lavatory signs 16a-16d and the input devices 30a-30c may also be configured for communicating via optical data transmission, in particular employing infrared light.

An LMS 50, which is configured for communicating via a wireless communication network 52, may be added to an aircraft passenger cabin 2 without the need for modifying the existing wiring within said aircraft passenger cabin 2.

In such a communication network 52, at least one of the smart lavatory signs 16a-16d and/or the input devices 30a-30c may be configured as a relay, i.e. at least one of the smart lavatory signs 16a-16d and/or input devices 30a-30c may be configured for receiving information from at least one other smart lavatory sign 16a-16d and/or input devices 30a-30c and for forwarding the received information to another smart lavatory sign 16a-16d or input device 30a-30c. Such a configuration may allow for transmitting information between the smart lavatory signs 16a-16d and/or input devices 30a-30c over large distances using short wires and/or an energy-efficient short range wireless data transmission. It is further possible that a majority or all of the smart lavatory signs and the input devices are configured as relays.

In the exemplary embodiment depicted in Figure 7, the LMS 50 is implemented in a master-slave-configuration. I.e. one of the smart lavatory signs 16a-16d, in the embodiment depicted in Figure 7 the first smart lavatory sign 16a, is implemented as a "master" comprising a controller 54, which is configured for providing the central functionalities of the LMS 50. The controller 54 receives the lavatory assignment requests 48 from lavatory assignment request buttons 30a-30c and assigns the lavatory assignment requests 48 to the waiting queues 60a-60d of the different lavatories 6a-6d, as it has been described with respect Figures 1 to 3. The controller 54 also re-configures the spatial zones 8a-8d of the aircraft passenger cabin 2, if necessary, as it has been described before.

The waiting queues 60a-60d of the different lavatories 6a-6d may be managed centrally by the controller 54. In an alternative configuration, the individual smart lavatory signs 16b-16d may by configured for managing their respective waiting queues 60a-60d autonomously. In the latter configuration, the smart lavatory signs 16a-16d are configured for supplying a signal indicating the current length of their respective waiting queues 60a-60d to the controller 54, in order to allow the controller 54 to re-configure the spatial zones 8a-8d of the aircraft passenger cabin 2 in case of an unbalanced distribution of the lavatory assignment requests 48.

At least one further smart lavatory sign 16b-16d may be additionally provided with controller functionalities for providing a backup controller 56, which may replace the controller 54 in case of a malfunction.

In another embodiment, the at least one controller 54, 56 is provided separately from the smart lavatory signs 16b-16d.

The LMS 50 may be connected with an aircraft system / aircraft passenger cabin management system 58, in order to allow for adjusting the operating of the LMS 50 based on information received from the aircraft system / aircraft passenger cabin management system 58. This may include, for example, blocking access to the lavatories 6a-6d during take-off and landing of the aircraft 1 and/or during unsafe flight conditions, such as heavy turbulences.

Optional functionalities of the LMS 50 may further include at least one of the following, in particular any subset of the following: deactivating at least one of the lavatories 6a-6d and issuing a service request to the aircraft crew in case a malfunction of a lavatory 6a-6d has been detected; locking the deactivated lavatory 6a-6d in order to prevent unauthorized access to the lavatory 6a-6d; re-activating and unlocking the at least one lavatory 6a-6d after the problem has been fixed; selectively activating and/or deactivating ventilation of at least one of the lavatories 6a-6d, in particular based on its use; activating a disinfection process of at least one of the lavatories 6a-6d, in particular based on its use, for example after the lavatory 6a-6d has been used by a predefined number of passengers 5.

While the invention has been described with reference to exemplary embodiments, it will be understood by those skilled in the art that various changes may be made. In addition many modifications may be made to adopt a particular situation or material to the teachings of the invention. Therefore, it is intended that the invention not be limited to the particular embodiment disclosed, but that the invention include all embodiments falling within the scope as defined by the following claims.

## Claims

1. Method of operating a lavatory management system (50) for assigning a passenger (5) to a lavatory (6a-6d) within an aircraft passenger cabin (2) in order to balance the load of the lavatories (6a-6d), wherein
the aircraft passenger cabin (2) comprises at least two lavatories (6a-6d), each having a waiting queue (60a-60d), and wherein the aircraft passenger cabin (2) is divided into at least two spatial zones (8a-8d), wherein the method includes the following steps executed by the lavatory management system (50):
- receiving a lavatory assignment request (48) from a passenger (5) via an input device (30a-30c);
- based on a seat location of said passenger (5), determining a particular spatial zone (8a-8d) of the aircraft passenger cabin (2) which includes the seat location of said passenger (5); and
- based on the particular spatial zone (8a-8d), adding the passenger (5) to the waiting queue (60a-60d) of a particular lavatory (6a-6d), associated with the particular spatial zone (8a-8d);
wherein the configuration of the at least two spatial zones (8a-8d) is variable and is based on a plurality of zone configuration parameters, the plurality of zone configuration parameters including a queue length of each of the waiting queues (60a-60d) of the at least two lavatories (6a-6d);
wherein the method includes providing a visual indication of the particular lavatory (6a-6d), whose waiting queue (60a-60d) the passenger (5) has been added to.

2. Method according to claim 1, wherein the aircraft passenger cabin (2) is divided into said at least two spatial zones (8a-8d) by at least one borderline (10, 12) and wherein the method includes:
re-configuring at least a subset of the at least two spatial zones (8a-8d) by moving at least one borderline (10, 12) based on said plurality of zone configuration parameters.

3. Method according to claim 2, wherein said at least one borderline (10, 12) includes at least one longitudinal borderline (10), extending in a longitudinal direction of the aircraft passenger cabin (2).

4. Method according to claim 3, wherein the method includes re-configuring at least a subset of the at least two spatial zones (8a-8d) by moving at least one longitudinal borderline (10) in a transverse direction of the aircraft passenger cabin (2).

5. Method according any of claims 2 to 4, wherein said at least one borderline (10, 12) includes at least one transverse borderline (12), extending in a transverse direction of the aircraft passenger cabin (2).

6. Method according to claim 5, wherein the method includes re-configuring at least a subset of the at least two spatial zones (8a-8d) by moving at least one transverse borderline (12) in a longitudinal direction of the aircraft passenger cabin (2).

7. Method according any of the preceding claims, wherein the method includes re-configuring the at least two spatial zones (8a-8d) in accordance with a predetermined re-configuration schedule, in particular in periodic intervals, and/or after the receipt of each lavatory assignment request (48).

8. Method according to any of the preceding claims, wherein the plurality of zone configuration parameters further include at least one of:
an in service / out of service indication for each of the at least two lavatories (6a-6d);
for each of the at least two lavatories (6a-6d), a total number of passengers (5), who have used the respective lavatory (6a-6d) since its last maintenance and/or cleaning; and
scheduled service times for each of the at least two lavatories (6a-6d).

9. Lavatory management system (50) for an aircraft passenger cabin (2) comprising at least two lavatories (6a-6d), wherein the lavatory management system (50) includes:
a plurality of smart lavatory signs (16a-16d);
a plurality of input devices (30a-30c), which are configured for allowing passengers (5) to input lavatory (6a-6d) assignment requests (48);
a controller (54, 56), which is configured for:
receiving lavatory (6a-6d) assignment requests (48) from the input devices (30a-30c);
adding passengers (5) to the waiting queues (60a-60d) of the at least two lavatories (6a-6d); and
providing visual outputs on the plurality of smart lavatory signs (16a-16d), with each visual output being indicative of at least a portion of the waiting queue (60a-60d) of at least one lavatory (6a-6d)
**characterized in that**
a method according to any of claims 1 to 8 is employed for adding passengers (5) to the waiting queues (60a-60d) of the at least two lavatories (6a-6d).

10. Lavatory management system (50) according to claim 9, wherein the plurality of smart lavatory signs (16a-16d), the plurality of input devices (30a-30c) and the controller (54, 56) are configured for communicating with each other via wireless data transmission, in particular via WLAN, Bluetooth, or an infrared data transmission.

11. Lavatory management system (50) according to claim 9 or 10, wherein the controller (54, 56) is integrated into one of the plurality of smart lavatory signs (16a-16d) or the plurality of input devices (30a-30c).

12. Lavatory management system (50) according to any of claims 9 to 11, wherein the lavatory management system (50) is configured for at least one of the following:
issuing a service request to an aircraft crew;
deactivating at least one of the lavatories (6a-6d) and closing/shutting down the waiting queue (60a-60d) of said lavatory (6a-6d);
activating at least one of the lavatories (6a-6d) and re-opening the waiting queue (60a-60d) of said lavatory (6a-6d);
activating and/or deactivating ventilation of at least one of the lavatories (6a-6d);
activating a disinfection process of at least one of the lavatories (6a-6d);
controlling visual status indicators (19), indicating the status of the at least two lavatories (6a-6d), which in particular include "free", "occupied", "out of order", "blocked for maintenance";
locking at least one of the lavatories (6a-6d) when the waiting queue (60a-60d) of said lavatory (6a-6d) is closed; and
unlocking at least one of the lavatories (6a-6d) when the waiting queue (60a-60d) of said lavatory (6a-6d) is reopened.

13. Lavatory management system (50) according to any of claims 9 to 12, wherein the smart lavatory signs (16a-16d) are located next to the at least two lavatories (6a-6d).

14. Aircraft (1) comprising an aircraft passenger cabin (2) with a plurality of passenger seats (4), at least two lavatories (6a-6d), and a lavatory management system (50) according to any of claims 10 to 13.

## Patentansprüche

1. Verfahren zum Betreiben eines Toilettenmanagementsystems (50) zum Zuweisen eines Passagiers (5) zu einer Toilette (6a-6d) innerhalb einer Luftfahrzeugpassagierkabine (2), um die Auslastung der Toiletten (6a-6d) auszubalancieren, wobei
die Luftfahrzeugpassagierkabine (2) mindestens zwei Toiletten (6a-6d) aufweist, die jeweils eine Warteschlange (60a-60d) aufweisen, und wobei die Luftfahrzeugpassagierkabine (2) in mindestens zwei räumliche Zonen (8a-8d) aufgeteilt ist, wobei das Verfahren die folgenden Schritte beinhaltet, die von dem Toilettenmanagementsystem (50) ausgeführt werden:
- Empfangen einer Toilettenzuweisungsanfrage (48) von einem Passagier (5) über eine Eingabevorrichtung (30a-30c);
- Bestimmen einer bestimmten räumlichen Zone (8a-8d) der Luftfahrzeugpassagierkabine (2), die einen Sitzplatz des Passagiers (5) beinhaltet, basierend auf dem Sitzplatz des Passagiers (5); und
- Hinzufügen des Passagiers (5) zu der Warteschlange (60a-60d) einer bestimmten Toilette (6a-6d), die mit der bestimmten räumlichen Zone (8a-8d) assoziiert ist, basierend auf der bestimmten räumlichen Zone (8a-8d);
wobei die Konfiguration der mindestens zwei räumlichen Zonen (8a-8d) variabel ist und auf einer Mehrzahl von Zonenkonfigurationsparametern basiert, wobei die Mehrzahl von Zonenkonfigurationsparametern eine Warteschlangenlänge jeder der Warteschlangen (60a-60d) der mindestens zwei Toiletten (6a-6d) beinhaltet;
wobei das Verfahren ein Bereitstellen einer visuellen Anzeige der bestimmten Toilette (6a-6d), zu deren Warteschlange (60a-60d) der Passagier (5) hinzugefügt wurde, beinhaltet.

2. Verfahren nach Anspruch 1, wobei die Luftfahrzeugpassagierkabine (2) durch mindestens eine Grenzlinie (10, 12) in die mindestens zwei räumlichen Zonen (8a-8d) aufgeteilt ist, und wobei das Verfahren beinhaltet: Neukonfigurieren mindestens einer Teilmenge der mindestens zwei räumlichen Zonen (8a-8d) durch Bewegen mindestens einer Grenzlinie (10, 12) basierend auf der Mehrzahl von Zonenkonfigurationsparametern.

3. Verfahren nach Anspruch 2, wobei die mindestens eine Grenzlinie (10, 12) mindestens eine Längsgrenzlinie (10) beinhaltet, die sich in einer Längsrichtung der Luftfahrzeugpassagierkabine (2) erstreckt.

4. Verfahren nach Anspruch 3, wobei das Verfahren ein Neukonfigurieren mindestens einer Teilmenge der mindestens zwei räumlichen Zonen (8a-8d) durch Bewegen mindestens einer Längsgrenzlinie (10) in einer Querrichtung der Luftfahrzeugpassagierkabine (2) beinhaltet.

5. Verfahren nach einem der Ansprüche 2 bis 4, wobei die mindestens eine Grenzlinie (10, 12) mindestens eine Quergrenzlinie (12) beinhaltet, die sich in einer Querrichtung der Luftfahrzeugpassagierkabine (2) erstreckt.

6. Verfahren nach Anspruch 5, wobei das Verfahren ein Neukonfigurieren mindestens einer Teilmenge der mindestens zwei räumlichen Zonen (8a-8d) durch Bewegen mindestens einer Quergrenzlinie (12) in einer Längsrichtung der Luftfahrzeugpassagierkabine (2) beinhaltet.

7. Verfahren nach einem der vorhergehenden Ansprüche, wobei das Verfahren ein Neukonfigurieren der mindestens zwei räumlichen Zonen (8a-8d) gemäß einem vorbestimmten Neukonfigurationsplan, insbesondere in periodischen Abständen und/oder nach dem Empfang jeder Toilettenzuweisungsanfrage, (48) beinhaltet.

8. Verfahren nach einem der vorhergehenden Ansprüche, wobei die Mehrzahl von Zonenkonfigurationsparametern ferner mindestens einen der folgenden beinhaltet:
eine In-Betrieb/Außer-Betrieb-Angabe für jede der mindestens zwei Toiletten (6a-6d);
eine Gesamtzahl von Passagieren (5), welche die jeweilige Toilette (6a-6d) seit ihrer letzten Wartung und/oder Reinigung benutzt haben, für jede der mindestens zwei Toiletten (6a-6d); und
geplante Servicezeiten für jede der mindestens zwei Toiletten (6a-6d).

9. Toilettenmanagementsystem (50) für eine Luftfahrzeugpassagierkabine (2), umfassend mindestens zwei Toiletten (6a-6d), wobei das Toilettenmanagementsystem (50) beinhaltet:
eine Mehrzahl von intelligenten Toilettenzeichen (16a-16d);
eine Mehrzahl von Eingabevorrichtungen (30a-30c), die dazu konfiguriert sind, Passagieren (5) zu ermöglichen, Anfragen (48) zur Zuweisung von Toiletten (6a-6d) einzugeben;
eine Steuereinheit (54, 56), die konfiguriert ist zum:
Empfangen von Anfragen (48) zur Zuweisung von Toiletten (6a-6d) von den Eingabevorrichtungen (30a-30c);
Hinzufügen von Passagieren (5) zu den Warteschlangen (60a-60d) der mindestens zwei Toiletten (6a-6d); und
Bereitstellen visueller Ausgaben auf der Mehrzahl von intelligenten Toilettenzeichen (16a-16d), wobei jede visuelle Ausgabe mindestens einen Teil der Warteschlange (60a-60d) von mindestens einer Toilette (6a-6d) angibt
**dadurch gekennzeichnet, dass**
ein Verfahren nach einem der Ansprüche 1 bis 8 zum Hinzufügen von Passagieren (5) zu den Warteschlangen (60a-60d) der mindestens zwei Toiletten (6a-6d) eingesetzt wird.

10. Toilettenmanagementsystem (50) nach Anspruch 9, wobei die Mehrzahl von intelligenten Toilettenzeichen (16a-16d), die Mehrzahl von Eingabevorrichtungen (30a-30c) und die Steuereinheit (54, 56) dazu konfiguriert sind, über drahtlose Datenübertragung, insbesondere über WLAN, Bluetooth oder eine Infrarot-Datenübertragung, miteinander zu kommunizieren.

11. Toilettenmanagementsystem (50) nach Anspruch 9 oder 10, wobei die Steuereinheit (54, 56) in eines von der Mehrzahl von intelligenten Toilettenzeichen (16a-16d) oder in eine von der Mehrzahl von Eingabevorrichtungen (30a-30c) integriert ist.

12. Toilettenmanagementsystem (50) nach einem der Ansprüche 9 bis 11, wobei das Toilettenmanagementsystem (50) zu mindestens einem der folgenden konfiguriert ist:
Ausstellen einer Serviceanfrage an eine Luftfahrzeugbesatzung;
Deaktivieren mindestens einer der Toiletten (6a-6d) und Schließen/Abschalten der Warteschlange (60a-60d) der Toilette (6a-6d);
Aktivieren mindestens einer der Toiletten (6a-6d) und erneutes Öffnen der Warteschlange (60a-60d) der Toilette (6a-6d);
Aktivieren und/oder Deaktivieren einer Belüftung mindestens einer der Toiletten (6a-6d);
Aktivieren eines Desinfektionsvorgangs mindestens einer der Toiletten (6a-6d);
Steuern von visuellen Statusangaben (19), die den Status der mindestens zwei Toiletten (6a-6d) angeben, der insbesondere "Frei", "Besetzt", "Außer Betrieb", "Wegen Wartung geschlossen" beinhaltet;
Verriegeln mindestens einer der Toiletten (6a-6d), wenn die Warteschlange (60a-60d) der Toilette (6a-6d) geschlossen ist; und
Entriegeln mindestens einer der Toiletten (6a-6d), wenn die Warteschlange (60a-60d) der Toilette (6a-6d) wieder geöffnet ist.

13. Toilettenmanagementsystem (50) nach einem der Ansprüche 9 bis 12, wobei die intelligenten Toilettenzeichen (16a-16d) sich neben den mindestens zwei Toiletten (6a-6d) befinden.

14. Luftfahrzeug (1), umfassend eine Luftfahrzeugpassagierkabine (2) mit einer Mehrzahl von Passagiersitzen (4), mindestens zwei Toiletten (6a-6d) und einem Toilettenmanagementsystem (50) nach einem der Ansprüche 10 bis 13.

## Revendications

1. Procédé de fonctionnement d'un système de gestion des toilettes (50) pour affecter un passager (5) à une toilette (6a-6d) à l'intérieur d'une cabine de passager d'aéronef (2) afin d'équilibrer la charge des toilettes (6a-6d), dans lequel
la cabine de passager d'aéronef (2) comprend au moins deux toilettes (6a-6d), chacune ayant une file d'attente (60a-60d), et dans lequel la cabine de passager d'aéronef (2) est divisée en au moins deux zones spatiales (8a-8d), dans lequel le procédé comporte les étapes suivantes exécutées par le système de gestion des toilettes (50) :
- la réception d'une demande d'affectation de toilettes (48) provenant d'un passager (5) via un dispositif d'entrée (30a-30c) ;
- en fonction de l'emplacement de siège dudit passager (5), la détermination d'une zone spatiale (8a-8d) particulière de la cabine de passager d'aéronef (2) qui comporte l'emplacement de siège dudit passager (5) ; et
- en fonction de la zone spatiale (8a-8d) particulière, l'ajout du passager (5) à la file d'attente (60a-60d) d'une toilette (6a-6d) particulière, associée à la zone spatiale (8a-8d) particulière ;
dans lequel la configuration des au moins deux zones spatiales (8a-8d) est variable et est basée sur une pluralité de paramètres de configuration de zone, la pluralité de paramètres de configuration de zone comportant une longueur de file d'attente de chacune des files d'attente (60a-60d) des au moins deux toilettes (6a-6d) ;
dans lequel le procédé comporte la fourniture d'une indication visuelle de la toilette (6a-6d) particulière, dont le passager (5) a été ajouté à la file d'attente (60a-60d).

2. Procédé selon la revendication 1, dans lequel la cabine de passager d'aéronef (2) est divisée en au moins deux zones spatiales (8a-8d) par au moins une ligne de démarcation (10, 12) et dans lequel le procédé comporte :
la reconfiguration d'au moins un sous-ensemble des au moins deux zones spatiales (8a-8d) en déplaçant au moins une ligne de démarcation (10, 12) sur la base de ladite pluralité de paramètres de configuration de zone.

3. Procédé selon la revendication 2, dans lequel ladite au moins une ligne de démarcation (10, 12) comporte au moins une ligne de démarcation longitudinale (10), se prolongeant dans une direction longitudinale de la cabine de passager d'aéronef (2).

4. Procédé selon la revendication 3, dans lequel le procédé comporte la reconfiguration d'au moins un sous-ensemble des au moins deux zones spatiales (8a-8d) en déplaçant au moins une ligne de démarcation longitudinale (10) dans une direction transversale de la cabine de passager d'aéronef (2).

5. Procédé selon l'une quelconque des revendications 2 à 4, dans lequel ladite au moins une ligne de démarcation (10, 12) comporte au moins une ligne de démarcation transversale (12), se prolongeant dans une direction transversale de la cabine de passager d'aéronef (2).

6. Procédé selon la revendication 5, dans lequel le procédé comporte la reconfiguration d'au moins un sous-ensemble des au moins deux zones spatiales (8a-8d) en déplaçant au moins une ligne de démarcation transversale (12) dans une direction transversale de la cabine de passager d'aéronef (2).

7. Procédé selon l'une quelconque des revendications précédentes, dans lequel le procédé comporte la reconfiguration des au moins deux zones spatiales (8a-8d) conformément à un programme de reconfiguration prédéterminé, en particulier à intervalles périodiques, et/ou après la réception de chaque demande d'affectation de toilettes (48).

8. Procédé selon l'une quelconque des revendications précédentes, dans lequel la pluralité de paramètres de configuration de zone comporte également au moins l'un des éléments suivants :
une indication en service/hors service pour chacun des au moins deux toilettes (6a-6d) ;
pour chacune des au moins deux toilettes (6a-6d), un nombre total de passagers (5) qui ont utilisé les toilettes (6a-6d) respectives depuis leur dernier entretien et/ou nettoyage ; et
les horaires de service prévus pour chacune des au moins deux toilettes (6a-6d).

9. Système de gestion des toilettes (50) pour une cabine de passager d'aéronef (2) comprenant au moins deux toilettes (6a-6d), dans lequel le système de gestion des toilettes (50) comporte :
une pluralité de panneaux de toilettes intelligents (16a-16d) ;
une pluralité de dispositifs d'entrée (30a-30c), qui sont configurés pour permettre aux passagers (5) d'entrer des demandes d'affectation (48) de toilettes (6a-6d) ;
un dispositif de commande (54, 56), qui est configuré pour :
recevoir des demandes d'affectation (48) de toilettes (6a-6d) provenant des dispositifs d'entrée (30a-30c) ;
ajouter des passagers (5) aux files d'attente (60a-60d) des au moins deux toilettes (6a-6d) ; et
fournir des sorties visuelles sur la pluralité de panneaux de toilettes intelligents (16a-16d), chaque sortie visuelle indiquant au moins une partie de la file d'attente (60a-60d) d'au moins une toilette (6a-6d)
**caractérisé en ce que**
un procédé selon l'une quelconque des revendications 1 à 8 est utilisé pour ajouter des passagers (5) aux files d'attente (60a-60d) des au moins deux toilettes (6a-6d).

10. Système de gestion des toilettes (50) selon la revendication 9, dans lequel la pluralité de panneaux de toilettes intelligents (16a-16d), la pluralité de dispositifs d'entrée (30a-30c) et le dispositif de commande (54, 56) sont configurés pour communiquer entre eux via une transmission de données sans fil, en particulier via WLAN, Bluetooth ou une transmission de données infrarouge.

11. Système de gestion des toilettes (50) selon la revendication 9 ou 10, dans lequel le dispositif de commande (54, 56) est intégré dans l'un de la pluralité de panneaux de toilettes intelligents (16a-16d) ou de la pluralité de dispositifs d'entrée (30a-30c).

12. Système de gestion des toilettes (50) selon l'une quelconque des revendications 9 à 11, dans lequel le système de gestion des toilettes (50) est configuré pour au moins l'une des actions suivantes :
l'émission d'une demande de service à un équipage d'aéronef ;
la désactivation d'au moins l'une des toilettes (6a-6d) et la fermeture/l'arrêt la file d'attente (60a-60d) desdites toilettes (6a-6d) ;
l'activation d'au moins l'une des toilettes (6a-6d) et la réouverture de la file d'attente (60a-60d) desdites toilettes (6a-6d) ;
l'activation et/ou la désactivation de la ventilation d'au moins une des toilettes (6a-6d) ;
l'activation d'un processus de désinfection d'au moins une des toilettes (6a-6d) ;
la commande d'indicateurs d'état visuels (19), indiquant l'état des au moins deux toilettes (6a-6d), qui comportent notamment « libre », « occupé », « hors service », « bloqué pour maintenance » ;
le verrouillage d'au moins l'une des toilettes (6a-6d) lorsque la file d'attente (60a-60d) desdites toilettes (6a-6d) est fermée ; et
le déverrouillage d'au moins l'une des toilettes (6a-6d) lorsque la file d'attente (60a-60d) desdites toilettes (6a-6d) est réouverte.

13. Système de gestion des toilettes (50) selon l'une quelconque des revendications 9 à 12, dans lequel les panneaux de toilettes intelligents (16a-16d) sont situés à côté des au moins deux toilettes (6a-6d).

14. Aéronef (1) comprenant une cabine de passager d'aéronef (2) avec une pluralité de sièges passagers (4), au moins deux toilettes (6a-6d) et un système de gestion des toilettes (50) selon l'une quelconque des revendications 10 à 13.
